# EUROPÄISCHE PATENTANMELDUNG

(11) **EP 0 984 301 A1**
(43) Veröffentlichungstag der Anmeldung: **08.03.2000**
(21) Anmeldenummer: 98116760.4
(22) Anmeldetag: 04.09.1998
(51) Int. Cl.: G01V 5/00

(54) **Verfahren und Vorrichtung zur Prüfung von Reisegepäck durch Röntgendurchleuchtung**

(71) Anmelder: YXLON International X-Ray GmbH, 22335 Hamburg (DE)
(72) Erfinder: Martens,Gerhard,Dr., 24558 Henstedt-Ulzburg (DE); Peemöller,Horst, 22179 Hamburg (DE)
(74) Vertreter: von Raffay, Vincenz, Dipl.-Ing.

(57) **Zusammenfassung**

Das Verfahren und die Vorrichtung zum Prüfen von Reisegepäck durch Röntgenstreuung arbeitet mit einem Transportband (10), auf dem das zu prüfende Gepäckstück (11) in einen die Röntgenkomponenten (Röntgeneinheit und Detektoreinheit) (6 bis 9) enthaltenden Scanner bewegt wird. Der Scanner wird bei stillstehendem Gepäckstück zur Durchführung eines Scannvorganges nach Art eines Schweibenwischers kreisförmig über das Gepäckstück geschwenkt. Eine Einrichtung unterbricht die Bewegung des Transportbandes mit dem Gepäckstück bei Start eines Scannvorganges und taktet die entsprechenden Wiederholungen des Scannvorganges in Abhängigkeit von der Größe (Länge) des Gepäckstückes. Durch die Durchführung einer kreisbogenförmigen Schwenkbewegung des Scanners über das stillstehende Gepäckstück muß das Gepäckstück selbst nicht quer zur Transportrichtung bewegt werden. Seitlich neben dem Transportband beansprucht die Vorrichtung aufgrund der kreisbogenförmigen Bewegung wenig Raum, so daß sie in die vorgegebenen Räumlichkeiten eines auf Flughäfen eingesetzten Gesamtgepäckfördersystems integriert werden kann.

## Beschreibung

Die Erfindung betrifft ein Verfahren und eine Vorrichtung nach dem Oberbegriff des Anspruches 1 bzw. des Anspruches 3.

Derartige Vorrichtungen sind in den unterschiedlichsten Ausgestaltungen bekannt. Sie dienen der automatischen Prüfung von Reisegepäck, insbesondere auf Flughäfen. Zu diesen Zweck sind sie in das Gepäckfluß- und -abwicklungs-system des jeweiligen Flughafens integriert. Hieraus ergeben sich grundsätzliche Rahmenbedingungen hinsichtlich Abmessungen und Prüfgeschwindigkeiten.

Bei dem in Verbindung mit der Erfindung eingesetzten Röntgendurchleuchtungsverfahren werden die Röntgenstrahlen, die von einer Röntgenröhre ausgehen, von dem durchleuchteten Gepäckstückinhalt gestreut. Dieses Streusignal wird von einem Detektor aufgefangen und von einer nachgeschalteten Elektronik berechnet. Das gemessene Spektrum ist eine Anzeige für die in dem Gepäckstück befindliche Substanz. Das Meßsignal wird mit den in einer Datenbank abgespeicherten Signalen verglichen. Bei einer Übereinstimmung erfolgt eine Alarmmeldung.

Es gibt nun grundsätzlich verschiedene Möglichkeiten, um das Gepäckstück vollständig abzutasten. In der Praxis kann pro Durchleuchtungsvorgang ein ungefähr 5 cm breiter Streifen abgescannt werden. Dieses bedeutet bei einem entsprechend großen Gepäckstück, daß ein Gesamtbild durch eine Vielzahl von einzeln abgescannten Streifen entsteht. Hierfür ist eine entsprechende Zeit erforderlich.

Das Gepäckstück wird auf dem Förderband bewegt. Bei einer feststehenden Röntgen/Detektoreinheit muß das Gepäckstück relativ zu dem Scanner, beispielsweise mäanderförmig, zwischen Röntgenröhre und Detektor bewegt werden, um ein Abscannen mit den notwendigen Streifeneinheiten durchzuführen. Hierzu muß die eigentliche Transportrichtung und Bewegung des Gepäckstückes unterbrochen und geändert werden. Dieses ist bei Reisegepäck auf Flughäfen nicht hinnehmbar, da jedes einzelne Gepäckstück, außer in Transportrichtung, auch noch hin- und herbewegt werden müsste (X/4).

Die andere Lösung würde darin bestehen, die Bewegung des Gepäckstückes in Transportrichtung kurz zu unterbrechen und während dieses Stillstandes ggf. mehrmals in den entsprechenden Streifen den Scanner über das Gepäckstück hin- und herzubewegen, um so ein Gesamtbild über den Inhalt zu erzeugen. Hierdurch würde die Vorrichtung aber Abmessungen erreichen, die bei den zur Verfügung stehenden Räumlichkeiten auf Flugplätzen nicht akzeptabel sind.

Der Erfindung liegt nun die Aufgabe zugrunde, ein Verfahren und eine Vorrichtung der eingangs genannten Art zu schaffen, die die Anforderungen hinsichtlich Prüfgeschwindigkeit und Prüfgenauigkeit erfüllt, ohne den Gesamtgepäckfluß in unakzeptabler Weise zu stören und gleichzeitig einen kompakten Aufbau der gesamten Vorrichtung zu gewährleisten, der den Einsatz bei vorgegebenen Räumlichkeiten ermöglicht.

Diese Aufgabe wird bei dem erfindungsgemäßen Verfahren durch das Kennzeichen des Anspruches 1 und bei der entsprechen Vorrichtung durch das Kennzeichen des Anspruches 3 gelöst.

Erfindungsgemäß führt der Scanner mit der Röntgen/Detektoreinheit eine scheibenwischerartige oder kreisbogenförmige Schwenkbewegung über das Gepäckstück bei stillstehendem Gepäckstück durch. Hierdurch wird ein entsprechend kreisbogenförmiger Streifen erfaßt. Dieser Vorgang wird in Abhängigkeit von der Größe des Gepäckstückes entsprechend häufig wiederholt, so daß ein Gesamtbild über den Inhalt des Gepäckstückes entsteht. Durch diese kreisbogenförmige Schwenkbewegung kann das Gepäckstück stillstehen, d.h. es muß nicht hin- und herbewegt werden. Diese Stillstandszeiten sind sehr kurz. Die Vorrichtung weist in der Breite geringe Abmessungen auf, so daß sie in vorhandene Räumlichkeiten integriert werden kann.

Vorteilhafte Ausgestaltungen sind Gegenstand der Unteransprüche.

Die Schwenkbewegung, die vor und zurück oder hin und her durchgeführt wird, führt einen Scannvorgang sowohl bei der Hin- als auch bei der Rückbewegung durch, uni möglichst schnell und rationell zu arbeiten (Anspruch 2).

Im folgenden wird die Erfindung unter Hinweis auf die Zeichnung anhand eines Ausführungsbeispieles näher erläutert.

Es zeigt:

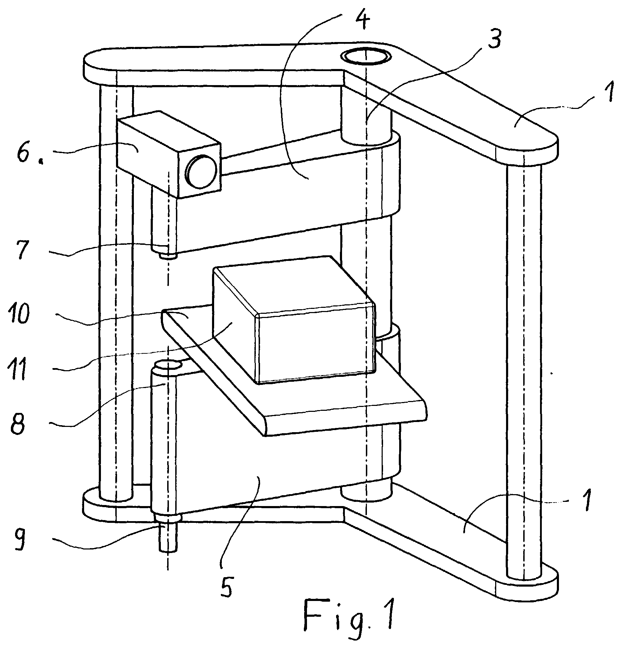

- Fig. 1: eine schematische, perspektivische Ansicht einer Vorrichtung nach der Erfindung zur Durchführung des erfindungsgemässen Verfahrens; und
- Fig. 2: eine schematische Draufsicht auf die Darstellung der Fig. 1 zur Erläuterung des erfindungsgemäßen Verfahrensablaufes.

In der Zeichnung ist ein Transportband 10 schematisch dargestellt. Ein Gepäckstück ist mit 11 bezeichnet. Auf dem endlosen Transportband werden kontinuierlich eine entsprechende Vielzahl von Gepäckstücken in die Vorrichtung bewegt.

Eine abgewinkelte Rahmenkonstruktion 1 bildet die Lagerung für den Scanner und sorgt für die notwendige Stabilität.

Der Scanner besteht aus einer Röntgeneinheit 4 und einer Detektoreinheit 5. Die über dem Förderband und dem Gepäckstück 11 angeordnete Röntgeneinheit 4 besteht aus einer Röntgenröhre 6 und einem Primärkollimator 7. Unterhalb des Förderbandes 10 befindet sich der Sekundärkollimator 8 und der Detektor 9. Der durch die Röntgeneinheit 4 und die Detektoreinheit 5 gebildete Scanner ist um die Mittelachse 3 der Rahmenkonstruktion 1 schwenkbar. Die Mittelachse 3 verläuft senkrecht zu der Ebene des Förderbandes 10.

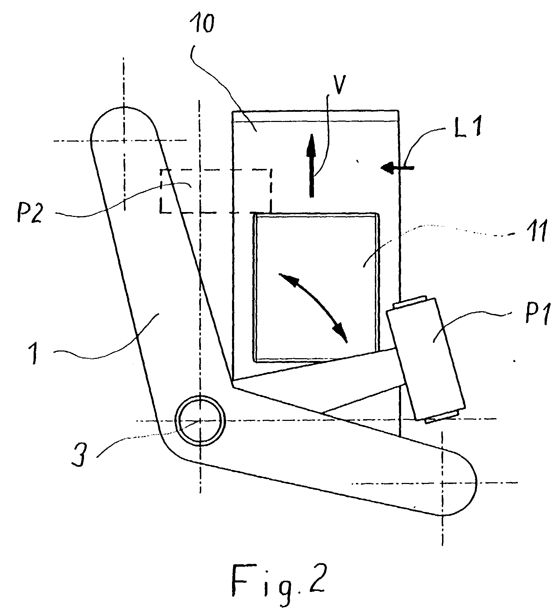

Beim Zufördern des Gepäckstückes befindet sich der Scanner in einer Startposition, die in Fig. 2 mit P1 bezeichnet ist. Das zu prüfende Gepäckstück 11 wird dann solange eingefördert, bis der Vortrieb V durch ein Signal einer Lichtschranke L1 gestoppt wird. Danach wird die Scannbewegung, d.h. die Schwenkbewegung nach Art eines Scheibenwischers über das Gepäckstück, gestartet. Der Scanner wird von der Position 1 in die Position 2 gebracht. Bei diesem Vorgang wird ein etwa 5 cm breiter Streifen abgescannt.

Nach Erreichen der Position P2 erfolgt eine erneute Vorwärtsbewegung V des Transportbandes 10 um 5 cm. Daraufhin wird wieder ein neuer Scannvorgang ausgeführt, und zwar von P2 nach P1. In diesem Zyklus wird das gesamte Gepäckstück abgescannt und überprüft. Ein Rechner wertet die entsprechenden Signale aus.

## Patentansprüche

1. Verfahren zum Prüfen von Reisegepäck durch Röntgendurchleuchtung, bei dem das zu prüfende Gepäckstück auf einem Transportband in einen die Röntgenkomponenten (Röntgeneinheit und Detektoreinheit) enthaltenden Scanner bewegt wird, dadurch gekennzeichnet, daß der Scanner bei stillstehendem Gepäckstück zur Durchführung eines Scannvorganges nach Art eines Scheibenwischers kreisbogenförmig über das Gepäckstück geschwenkt wird, und daß dieser Vorgang nach getaktetem Vorrücken des Gepäckstückes in Abhängigkeit von der Größe (Länge) des Gepäckstückes wiederholt wird.

2. Verfahren nach Anspruch 1, dadurch gekennzeichnet, daß sowohl bei der Hinbewegung des Scanners aus der Ausgangsstellung als auch bei seiner Rückbewegung, ein Scannvorgang durchgeführt wird, wobei das Gepäckstück zwischen beiden Scannvorgängen entsprechend vorgerückt wird.

3. Vorrichtung zum Prüfen von Reisegepäck durch Röntgendurchleuchtung mit einem das zu prüfende Gepäckstück (11) in einen die Röntgenkomponenten (Röntgeneinheit und Detektoreinheit) (6 bis 9) enthaltenden Scanner bewegende Transportband (10), dadurch gekennzeichnet, daß der Scanner um eine zur Transportebene senkrechte Achse (3) derart schwenkbar ist, daß er zur Durchführung eines Scannvorganges eine kreisförmige Schwenkbewegung nach Art eines Scheibenwischers über das Gepäckstück (11) ausführt, und daß eine Einrichtung vorgesehen ist, die die Bewegung des Transportbandes (10) mit dem Gepäckstück (11) beim Start des Scannvorganges unterbricht, und entsprechende Wiederholungen des Scannvorganges in Abhängigkeit von der Größe (Länge) des Gepäckstückes taktet.

4. Vorrichtung nach Anspruch 3, dadurch gekennzeichnet, daß der Scanner an einer abgewinkelten Rahmenkonstruktion (1) gelagert ist, wobei die Schwenkachse (3), die senkrecht zur Transportebene verläuft, die Mittelachse der Rahmenkonstruktion bildet.

5. Vorrichtung nach Anspruch 3 oder 4, dadurch gekennzeichnet, daß die Bewegung des Transportbandes durch eine die Gepäckstücke (10) erfassende Lichtschranke (L1) gesteuert wird.
